# EUROPEAN PATENT APPLICATION

(11) **EP 4 628 803 A1**
(43) Date of publication of application: **08.10.2025**
(21) Application number: 22967286.0
(22) Date of filing: 30.11.2022
(51) Int. Cl.: F24D 3/14, F28D 15/02, F24D 13/02

(54) **HEAT PIPE ASSEMBLY FOR HEATING**

(71) Applicant: Kim, Myung Won, Seoul 06197 (KR); Jun, Sun Wuk, Seoul 06197 (KR)
(72) Inventor: Kim, Myung Won, Seoul 06197 (KR); Jun, Sun Wuk, Seoul 06197 (KR)
(74) Representative: Cabinet Chaillot
(86) International application number: PCT/KR2022/019251
(87) International publication number: WO 2024/117309

(57) **Abstract**

The present invention relates to a heat pipe assembly for heating. The heat pipe is configured to repeatedly evaporate and condense the working fluid within it as heat is supplied from below. The heat source contacts the bottom of the heat pipe along its length to supply heat. The heat sink supports the heat source along the heat pipe's underside and dissipates heat transferred from the heat pipe to the outside.

## Description

### [Technical Field]

The present invention relates to a heating heat pipe assembly, and more particularly, to a heat pipe assembly that can be applied to underfloor heating or facility heating systems.

### [Background Art]

Currently, the heating method of heating pipe for the underfloor heating can be classified into hot water type and electric type, depending on the heat source. In the hot water type, the heat source is the hot water in the hot water pipe head, while in the electric type, the heat is generated from the electrical resistance of a heater

The heat pipe absorbs heat at the heat absorption part (evaporation section), vaporizing the working fluid, which then moves to the heat dissipation part, condenses, and returns to the heat absorption part to repeat the process.

In this case, for a thermo-syphon type heat pipe, the heat-absorbing section must be positioned lower than the heat-dissipating section by providing a slope, so that the working fluid, which is vaporized by absorbing heat at the heat-absorbing section, moves to the heat-dissipating section, releases heat, condenses, and then returns to the heat-absorbing section by gravity. On the other hand, for a wick type heat pipe, the condensed liquid-state working fluid returns to the heat-absorbing section through the capillary action of the wick formed on the inner surface of the heat pipe, and therefore, it can be installed horizontally without any slope.

As such, when using the thermo-syphon type heat pipe for underfloor heating, a slope is essential during installation to allow the return of the working fluid. This results in temperature differences on the floor surface and an increase in the amount of finishing mortar, which are disadvantages. In addition, the installer must perform piping work to individually connect the heat pipes to the hot water pipe headers, which can lead to defects such as leakage at the connection points and requires a significant amount of work time.

Even when using electric heat pipes for underfloor heating installation, electrical wiring work is required to connect the main power line to each electric heater after individually coupling the electric heaters to the heat pipes. Although the connected portions are finished with shrink tubing or similar means, defects such as short circuits due to moisture may occur, particularly in underground rooms.

### [Description of the Invention]

### [Technical Problem]

The object of the present invention is to provide a heat pipe assembly for heating that not only eliminates the root causes of defects such as water leakage or short circuits, but also omits hot water pipe headers in the case of hot water systems and electric heaters in the case of electric systems, thereby reducing the installation time.

### [Solution to Problem]

The heat pipe assembly for heating according to the present invention, which is designed to achieve the aforementioned object, includes a heat pipe, a heat source, and a heat sink. The heat pipe is installed in a horizontally extended state and is configured such that a working fluid within the lower interior space evaporates due to heat supplied from the lower external side, rises vertically, condenses, and then descends vertically, repeating this cycle. The heat source is in contact with the lower external side of the heat pipe along its longitudinal direction to supply heat. The heat sink accommodates and supports the heat pipe while contacting the heat source along the longitudinal direction on the lower external side of the heat pipe, and it receives heat generated from the heat pipe and dissipates it to the outside.

Here, the heat source may be formed of a hot water pipe through which hot water flows inside, or of a heating wire that generates heat by electrical resistance.

In one aspect, the heat sink may include: a heat source receiving part having an opening along a longitudinal direction at an upper side thereof and surrounding the heat source; a heat pipe receiving part having an upper opening along a longitudinal direction at an upper side thereof and extending from both sides of the upper opening of the heat source receiving part to surround the heat pipe; and heat-dissipating fins respectively extending horizontally from both sides of the upper opening of the heat pipe receiving part.

In another aspect, the heat sink may include: a heat source receiving part having an opening along a longitudinal direction at an upper side thereof and surrounding the heat source; a heat pipe receiving part extending from both sides of the upper opening of the heat source receiving part to surround the heat pipe; and heat-dissipating fins protruding outward from the heat pipe receiving part.

### [Advantageous Effects]

In the heat pipe assembly for heating according to the present invention, when the heat pipe assembly is configured in a hot water type, a hot water pipe head is omitted so that a direct connection work with the heat pipe is not required, thereby shortening a working time and eliminating a cause of defects such as water leakage in a connection part.

When the heat pipe assembly for heating according to the present invention is configured in an electric type, a coupling operation between the heat pipe and the electric heater and a wire connection operation between the main wire and the electric heater wire are not required, thereby shortening a working time and eliminating a cause of a defect such as a short circuit.

In the heat pipe assembly for heating according to the present invention, unlike the conventional heat pipe method, the working fluid does not need to move between the heat absorption part and the heat radiation part in the longitudinal direction of the heat pipe, and a capillary structure for returning the working fluid in a liquid state after heat radiation or an inclined construction for using force in itself is unnecessary, thereby more efficiently performing heating than an existing method.

### [Description of Drawings]

FIG. 1 is a perspective view of a heat pipe assembly for heating according to an embodiment of the present invention.
FIG. 2 is an exploded perspective view of FIG. 1.
FIG. 3 is a cross-sectional view of FIG. 1.
FIG. 4 is a perspective view illustrating an example in which the heat pipe assembly for heating illustrated in FIG. 1 is constructed for underfloor heating.
FIG. 5 is a perspective view of a heat pipe assembly for heating according to another embodiment of the present invention.
FIG. 6 is an exploded perspective view of FIG. 5.
FIGS. 7 to 10 are views illustrating examples in which the heat pipe assembly for heating illustrated in FIG. 5 is constructed for facility heating.

### [Embodiments of the Invention]

Hereinafter, the present invention will be described in detail with reference to the accompanying drawings. Here, the same reference numerals are used for the same configurations, and a repeated description and a detailed description of known functions and configurations that may unnecessarily obscure the gist of the present invention will be omitted.

The embodiments of the present invention are provided to more completely describe the present invention to those skilled in the art. Therefore, the shape and size of the elements in the drawings may be exaggerated for clarity.

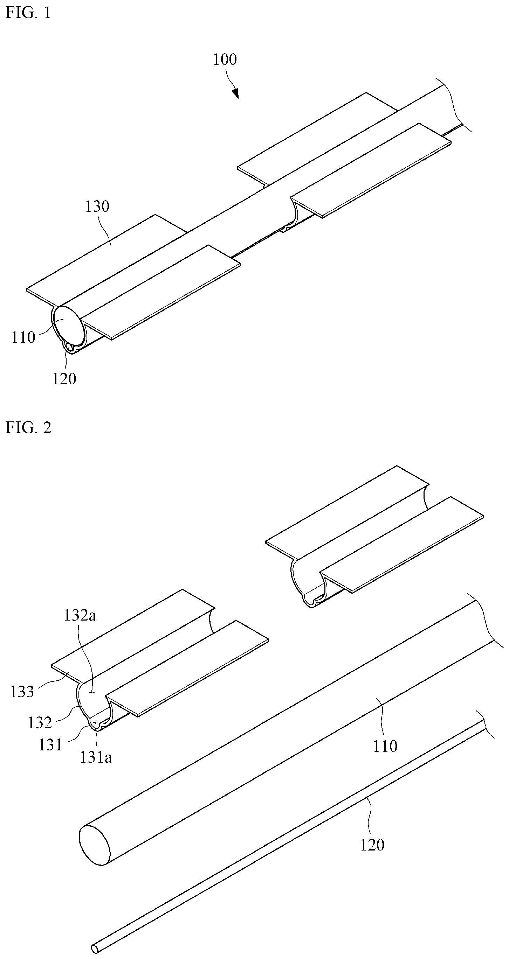

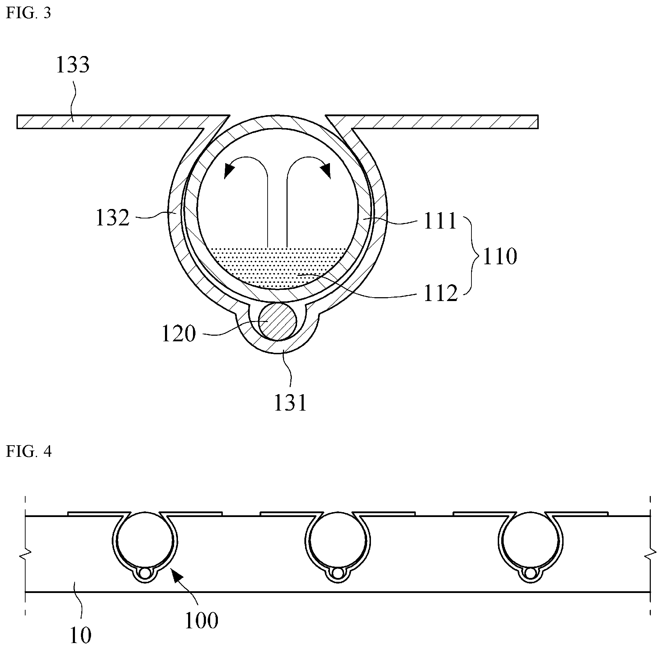

FIG. 1 is a perspective view of a heat pipe assembly for heating according to an embodiment of the present invention. FIG. 2 is an exploded perspective view of FIG. 1. FIG. 3 is a cross-sectional view of FIG. 1.

Referring to FIGS. 1 to 3, a heat pipe assembly 100 for heating according to an embodiment of the present invention includes a heat pipe 110, a heat source 120, and a heat sink 130.

The heat pipe 110 is constructed in a horizontally long manner so that the working fluid 112 in the inner lower space is evaporated by heat supplied from the outer lower side, rises vertically, and then condenses and descends vertically, repeating the movement.

Specifically, the heat pipe 110 is configured to contain only a portion of the working fluid 112 in the space within the sealed tube 111. The tube 111 is configured as a circular tube having a certain diameter. The tube 111 may be configured from various known materials having high thermal conductivity. In addition, the working fluid 112 may be configured from various known types.

When these heat pipes 110 are arranged horizontally and elongated, the working fluid 112 is filled in the lower space within the tube 111 to a certain height along the length direction of the tube 111. In this state, the working fluid 112 absorbs heat supplied from the lower exterior of the tube 111, evaporates, rises vertically, and then condenses by taking heat from the upper portion of the tube 111. At this time, the upper portion of the tube 111 can be heated.

Thereafter, the condensed working fluid 112 descends vertically by its own gravity and returns to the lower space within the tube 111. The working fluid 112 efficiently heats the upper part of the tube 111 by repeating the movement of evaporating, rising vertically, and then condensing and descending vertically, thereby enabling the heat pipe 110 to be used for heating.

The heat source 120 supplies heat by contacting the outer lower side of the heat pipe 110 along the length direction of the heat pipe 110. That is, the heat source 120 can evenly transfer heat along the length direction of the heat pipe 110 to the outer lower side of the heat pipe 110 by heat conduction.

For example, the heat source 120 may be formed of a hot water pipe with hot water flowing inside. The hot water pipe may receive hot water from a hot water supply source and conduct the hot water heat to the outer lower side of the heat pipe 110. Accordingly, the heating heat pipe assembly 100 may be configured to heat in a hot water manner.

As another example, the heat source 120 may be formed of a heating wire that generates heat through electrical resistance. The heating wire is formed of a configuration in which an electrical resistance body is covered with an insulating material. The heating wire can conduct the electrical resistance heat generated by supplying electricity from an electrical supply source to the outer lower side of the heat pipe 110. Accordingly, the heating heat pipe assembly 100 may be configured to heat electrically.

The heat sink 130 accommodates the heat source 120 along the length of the heat pipe 110 by contacting the heat source 120 with the outer lower side of the heat pipe 110 and supporting it. The heat sink 130 enables the heat source 120 to be maintained in close contact with the outer lower side of the heat pipe 110.

Therefore, the heat sink 130 can evenly conduct the hot water or electric resistance heat of the heat source 120 along the length of the heat pipe 110 to the outer lower side of the heat pipe 110. The heat sink 130 receives the heat generated from the heat pipe 110 and releases it to the outside. The heat sink 130 can increase the heating efficiency by expanding the heat dissipation area.

For example, the heat sink 130 may include a heat source receiving portion 131, a heat pipe receiving portion 132, and heat dissipation pieces 133. The heat source receiving portion 131 has an upper opening 131a along the longitudinal direction on the upper side and surrounds the heat source 120.

The upper opening 131a of the heat source receiving portion 131 exposes the upper portion of the heat source 120 so that it can come into contact with the outer lower portion of the heat pipe 110. When the outer circumference of the heat source 120 is circular, the heat source receiving portion 131 can support the outer circumference of the heat source 120 by making maximum surface contact with the inner surface by forming a circular curved surface. The heat source receiving portion 131 can be formed with a uniform thickness.

The heat pipe receiving portion 132 has an opening 132a along the longitudinal direction on the upper side and extends from both sides of the upper opening 131a of the heat source receiving portion 131 to surround the heat pipe 110. The upper opening 132a of the heat pipe receiving portion 132 allows the upper portion of the heat pipe 110 to be exposed.

Therefore, when the heating heat pipe assembly 100 is installed for the underfloor heating, the exposed upper part of the heat pipe 110 can directly transfer heat to the mortar layer covering the upper part. When the outer circumference of the heat pipe 110 is circular, the heat pipe receiving portion 132 can support the outer circumference of the heat pipe 110 by making maximum surface contact with the inner surface by forming a circular curved surface. The heat pipe receiving portion 132 can be formed with a uniform thickness.

The heat dissipation pieces 133 extend horizontally from both sides of the upper opening 132a of the heat pipe receiving portion 132. When the heating heat pipe assembly 100 is installed for the underfloor heating, the heat dissipation pieces 133 can directly transfer heat to a wider area to the mortar layer covering the upper portion. The heat dissipation pieces 133 can each be formed in a plate shape with a uniform thickness. The heat source receiving portion 131, the heat pipe receiving portion 132, and the heat dissipation pieces 133 can all be formed with the same thickness.

The heat sink 130 may be a form in which the heat source receiving portion 131, the heat pipe receiving portion 132, and the heat dissipation portion 133 are integrated, and can be manufactured from a known conductive metal material such as aluminum. The heat sink 130 can be formed by bending or the like using a plate of a certain thickness.

The heat sink 130 may accommodate the heat pipe 110 and the heat source 120 in a form divided into multiple parts along the length of the heat pipe 110 for ease of construction. The heating heat pipe assembly 100 of this embodiment may be constructed in a form of multiple horizontal arrangements on the ondol floor 10 as shown in FIG. 4 to perform ondol heating.

In this way, according to the heating heat pipe assembly 100 of this embodiment, when configured as a hot water type, the hot water pipe head is omitted, so direct connection work with the heat pipe is not necessary, so not only can the work time be shortened, but also the cause of defects such as water leakage at the connection part is eliminated.

According to the heating heat pipe assembly 100 of this embodiment, if it is configured electrically, there is no need for wiring work between the heat pipe and the electric heater, so not only can the work time be shortened, but the cause of defects such as electric leakage is eliminated.

In addition, according to the heating heat pipe assembly 100 of the present embodiment, since the heat source 120 is arranged on the entire outer lower surface of the heat pipe 110, the working fluid 112 not only absorbs heat quickly but also moves vertically due to evaporation and condensation, so unlike the existing heat pipe method, the working fluid does not need to move between the heat absorption and heat dissipation portions in the length direction of the heat pipe, and there is no need for a capillary structure or an inclined construction to utilize self-gravity to return the working fluid in a liquid state after heat dissipation. As a result, the heating heat pipe assembly 100 of the present embodiment can perform heating more efficiently than the existing method.

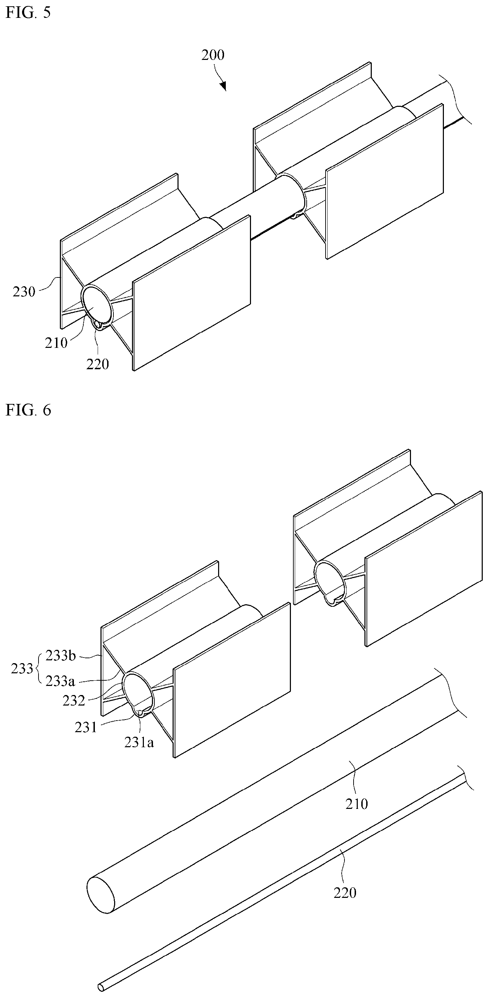

Fig. 5 is a perspective view of a heating heat pipe assembly according to another embodiment of the present invention. Fig. 6 is an exploded perspective view of Fig. 5.

Referring to FIGS. 5 and 6, a heating heat pipe assembly 200 according to another embodiment of the present invention includes a heat pipe 210, a heat source 220, and a heat sink 230.

The heat pipe 210 and the heat source 220 of the present embodiment can be configured in the same manner as the heat pipe 110 and the heat source 120 of the above-described embodiment. The heat sink 230 of the present embodiment includes a heat source receiving portion 231, a heat pipe receiving portion 232, and heat dissipation pieces 233.

The heat source receiving portion 231 has an opening 231a along the longitudinal direction on the upper side and surrounds the heat source 220. The upper opening 231a of the heat source receiving portion 231 exposes the upper part of the heat source 220 so that it can contact the outer lower side of the heat pipe 210. When the outer circumference of the heat source 220 is circular, the heat source receiving portion 231 can support the outer circumference of the heat source 220 by making maximum surface contact with the inner surface of the circular curved surface. The heat source receiving portion 231 can be formed with a uniform thickness.

The heat pipe receiving portion 232 extends from both sides of the upper opening 231a of the heat source receiving portion 231 and wraps the heat pipe 210. The heat pipe receiving portion 232 wraps the heat pipe 210 in a closed form except for the opening 231a portion that communicates with the heat source receiving portion 231.

If the outer circumference of the heat pipe 210 is circular, the heat pipe receiving portion 232 may have an inner surface formed as a circular curved surface to support the outer circumference of the heat pipe 210 by making surface contact. The heat pipe receiving portion 232 may be formed with a uniform thickness. The heat pipe receiving portion 232 and the heat source receiving portion 231 may be formed with the same thickness.

The heat dissipation pieces 233 protrude outwardly from the heat pipe receiving portion 232. The heat dissipation pieces 233 may include four first heat dissipation pieces 233a that protrude radially and symmetrically on two sides from the heat pipe receiving portion 232, and two second heat dissipation pieces 233b that are vertically erected on both sides of the heat pipe receiving portion 232 and connect two first heat dissipation pieces 233a at each end. Of course, the heat dissipation pieces 233 are not limited to those exemplified and may be formed in various forms.

The heat sink 230 may be formed by integrating a heat source receiving portion 231, a heat pipe receiving portion 232, and heat dissipation pieces 233, and can be manufactured from a known conductive metal material such as aluminum. The heat sink 230 can be formed into a profile shape by extrusion processing, etc. For the convenience of construction, the heat sink 230 can also receive the heat pipe 210 and the heat source 220 in a form divided into multiple parts along the length direction of the heat pipe 210. The heating heat pipe assembly 200 of the present embodiment can also exhibit the same effect as the heating heat pipe assembly 100 of the aforementioned embodiment.

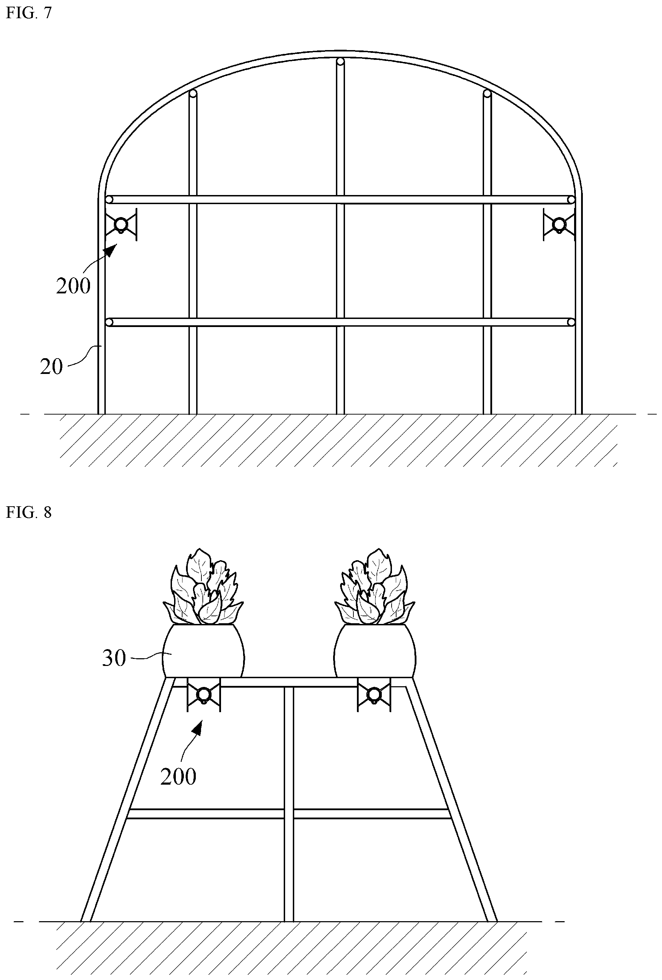

The heating heat pipe assembly 200 of this embodiment can be constructed in various ways for facility heating, as shown in FIGS. 7 to 10.

First, as shown in Fig. 7, a heating heat pipe assembly 200 is constructed in a form in which a number of horizontally arranged ones are installed on the upper side of a vinyl house 20 so as to perform heating for the entire interior of the vinyl house 20.

As shown in Fig. 8, the heating heat pipe assembly 200 can be installed in a horizontal arrangement adjacent to each of the bed pipes 30 for growing crops in a vinyl house to perform heating.

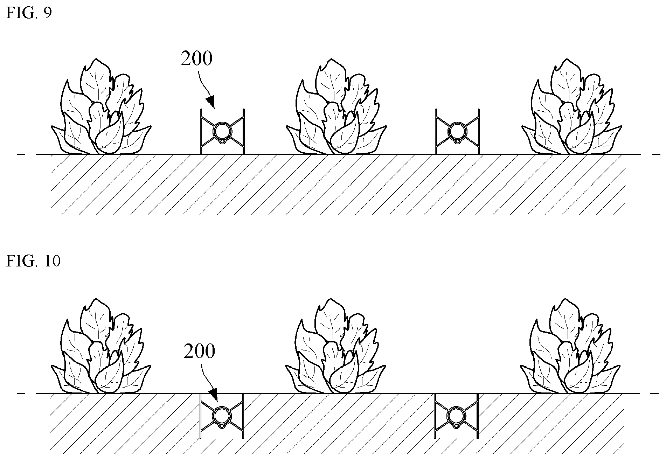

As shown in Fig. 9, the heating heat pipe assembly 200 can be constructed in a form of multiple horizontal arrangements on the ground inside a vinyl house to perform heating. As shown in Fig. 10, the heating heat pipe assembly 200 can be constructed in a form of multiple horizontal arrangements on the ground inside a vinyl house to perform heating.

The present invention has been described with reference to one embodiment shown in the attached drawings, but this is merely exemplary, and those skilled in the art will understand that various modifications and equivalent other embodiments are possible from this. Therefore, the true scope of protection of the present invention should be determined only by the appended claims.

## Claims

1. A heat pipe assembly for heating, comprising:
a heat pipe configured to be installed horizontally and long, and to repeat a movement in which a working fluid in an inner lower space thereof is evaporated by heat supplied from an outer lower side thereof, rises vertically, and then condenses and descends vertically;
a heat source configured to contact the outer lower side of the heat pipe along a length of the heat pipe and to supply heat to the heat pipe; and
a heat sink configured to support the heat source so that the heat source contacts the outer lower side of the heat pipe along the length of the heat pipe, to accommodate the heat source and the heat pipe together, to receive the heat from the heat pipe and to radiate the received heat to an outside.

2. The heat pipe assembly of claim 1, wherein the heat source is formed of a hot water pipe through which hot water flows or a heating wire that generates heat by electrical resistance.

3. The heat pipe assembly according to claim 1, wherein the heat sink comprises:
a heat source receiving part configured to have an opening along a longitudinal direction on an upper side thereof and to surround the heat source;
a heat pipe receiving part configured to have an opening along a longitudinal direction on an upper side thereof and to extend from both sides of the opening of the heat source receiving part to surround the heat pipe; and
heat dissipation pieces configured to respectively extend horizontally from both sides of the opening of the heat pipe receiving part.

4. The heat pipe assembly according to claim 1, wherein the heat sink comprises:
a heat source receiving part configured to have an opening along a longitudinal direction on an upper side thereof and to surround the heat source;
a heat pipe receiving part configured to extend from both sides of the opening of the heat source receiving part to surround the heat pipe; and
heat dissipation pieces configured to protrude outward from the heat pipe receiving part.
